# EUROPEAN PATENT SPECIFICATION

(11) **EP 1 889 546 B1**
(45) Date of publication and mention of the grant of the patent: **19.03.2014**
(21) Application number: 07111711.3
(22) Date of filing: 04.07.2007
(51) Int. Cl.: A23D 7/00, A23D 9/00, A23L 1/40

(54) **Fat-containing particulate food mixture**
Fetthaltige teilchenförmige Nahrungsmittelmischung
Mélange alimentaire particulaire contenant de la graisse

(30) Priority: 17.08.2006 EP 06119081
(43) Date of publication of application: 20.02.2008
(73) Proprietor: Unilever N.V., 3013 AL Rotterdam (NL); Unilever PLC, London EC4Y 0DY (GB)
(72) Inventor: Olcay, Ayse Seryal, 74074 Heilbronn (DE); Rupp, Winfried, 74074 Heilbronn (DE)
(74) Representative: Tjon, Hon Kong Guno

(56) References cited:
- EP-A- 1 249 172
- EP-A1- 0 803 196
- EP-A1- 1 419 699
- EP-A2- 1 101 409
- WO-A-01/05241
- WO-A-96/14756
- WO-A-96/19115
- WO-A-2004/045296
- WO-A-2004/045297
- WO-A-2005/051103
- WO-A-2005/074722
- WO-A-2006/079445
- US-A- 3 634 100
- VAN VLIET, M.N., VAN KEMPEN, G.M.P., REINDERS, M.J.T., AND DE RIDDER, D.: "Computational estimation of the composition of fat/oil mixtures containing interesterifications from gas and liquid chromatography data" JOURNAL OF THE AMERICAN OIL CHEMISTS' SOCIETY., vol. 82, no. 10, 2005, pages 707-716, XP002416822 USAMERICAN OIL CHEMISTS' SOCIETY. CHAMPAIGN.
- GHOSH S ET AL: "UTILIZATION OF HIGH-MELTING PALM STEARIN IN LIPASE-CATALYZED INTERESTERIFICATION WITH LIQUID OILS" JOURNAL OF THE AMERICAN OIL CHEMISTS' SOCIETY, AOCS PRESS, CHAMPAIGN, IL, US, vol. 74, no. 5, May 1997 (1997-05), pages 589-592, XP000691987 ISSN: 0003-021X

## Description

### Field of the invention

The present invention relates to fat-containing particulate food mixtures like roux, wherein the fat is prepared by interesterification of a blend of fractionated vegetable fats, and is defined by the products and processes set out in the claims.

### Background of the invention

There are many (dry) food formulations, in particular in the area of particulate food formulations, and more in particular dry concentrates for preparing soups, sauces and roux, that contain fat. "Dry" in this connections means less than 10%, preferably less than 5% total moisture. "Roux" in this connection means formulations that comprise mainly fat and flour (and optionally starch), and wherein fat and flour are present in amounts of 25-70% by weight, plus optionally minor amounts of other ingredients like taste imparting components. The fat used should have a good mouthfeel, should be easy to process in the production of the food formulation concerned (e.g. the intermediate or final product mixture should be easily flowable, without too much stickyness), and should lead to a product which can be stored well without e.g. fat staining or risk on early deterioration.

Traditionally (up till end 1990's) the fat used for e.g. roux and other (dry) particulate mixes which are high in fat (at least 30% by weight of the total mixture) was prepared by partial hardening (vegetable) fat. This produced fats which had excellent melting behaviour, e.g. as expressed by a steep melting curve. However, such fat also contained, due to the partial hardening, considerable amounts of triglycerides containing trans-unsaturated fatty acids (shortened to "a high level of trans", or "a high level of TFA's" = a high level of trans fatty acids). Since several years, there is a desire to reduce the level of trans fatty acids in foodstuffs, also in particulate foodstuffs high in fat, such as e.g. roux.

An alternative has been proposed in EP 823473, which discloses a rapid crystallizing fat with a low level of trans fatty acids, which fat is suitable for use in dry soups and sauces, and which fats are produced by interesterification of a blend of palm fat stearin and beef tallow (or fractions thereof). Still, this requires the use of fats from animal origin, which can be undesired for various reasons (health, religion, being vegetarian, dietary requirements, and others).

A further alternative has been proposed by EP 1249172, which discloses a fat (for use e.g. in a roux-like product) which is prepared by interesterification of a blend of fully hydrogenated fat and native vegetable oil. The native vegetable oil may be obtained by fractionation. Although such fat may have satisfactory melting behaviour (e.g. a steep melting curve) and does not contain animal fat, such fat contains a considerable amount of saturated fatty acids, and additionally will need to be declared on the product label in many countries as "hardened fat", which is unattractive from a marketing point of view, as well as that fully saturated fatty acids are less attractive from a health point of view.

WO 2004/045297 discloses roux, of which the fat phase is e.g. a fractionated palm oil, or is the result of interesterification of a blend of palm oil and hardened rape oil.

US 2005/0276900 discloses margerines with fat, wherein the fat is low in saturated fatty acids (SAFA's) and low in trans fatty acids (TFA's). The fats are prepared by selective fractionation of a palm stearin fraction with a dry fractionated palm kernel stearin fraction.

Z. Zainal and M.S.A. Yusoff have described in JAOCS Vol. 76, no. 9, pp 1003-1008 (1999) that enzymatic interesterification of palm stearin with palm kernel olein may give fats with properties suitable for use in margerines. It is reported that the slip melting point of the olein / stearin blend before interesterification is higher than after interesterification.

### Summary of the invention

Hence, there is a need for a particulate or granular, dry (less than 10% total moisture, preferably less than 5% of total moisture) food product, which product is preferably not sticky but to a considerable extent free flowing (mainly for processing reasons, e.g. to facilitate dosing and packaging), and which food product contains at least 25% preferably at least 30% of fat and 40-75% flour and/or starch, wherein the fat:
- is low in trans unsaturated fatty acids (or triglycerides thereof) (less than 3% on total fat, preferably less than 1 %),
- comprises less than 3% (% by weight, based on total fat level), preferably less than 1 %, of hydrogenated fat,
- has a steep melting curve (e.g. for good mouthfeel and processing), preferably similar to that of partially hydrogenated vegetable fat as used in the past,
- is low (less than 3%, preferably less than 1 %) in triglycerides containing lauric acid (to reduce tendency to off-flavour (e.g. soapiness) due to residual enzymatic activity in the ingredients other than fat).

It has now been found that such can be achieved to at least some extent by a process for manufacturing a particulate food product having a total moisture level of less than 10% (by weight on the total food product, preferably less than 5%) and comprising 25-60% (by weight based on the total food product) of fat and 40-75% (by weight based on the total food product) of flour and/or starch, wherein 80-100% (preferably 90-100%) of said fat is obtainable by:
- blending a first fraction comprising 80-100% (by weight, preferably 90-100%) fractionated palm oil stearin (POs) with a second fraction comprising 80-100% (by weight, preferably 90-100%) multifractionated palm oil stearin (mfPOs) in a weight ratio of 50-95% first fraction and 50-5% second fraction,
- subjecting said blended fat fractions to an interesterification process,
- mixing the so-obtained fat with the flour and/or starch, and subjecting said mixture to a temperature of at least 80°C, preferably at least 100°C, more preferably at least 110°C,
- reducing the moisture content to below 10% by weight, preferably below 5% by weight (based on total composition),
- cooling to room temperature of the mixture so obtained,
- optionally reducing the size of the so-obtained mixture.

The amount of fat used in the present composition is preferably 25-50%, more preferably 30-45%. The composition preferably comprises 10-65% (weight % on total mixture) flour and/or 0-65% starch (e.g. waxy maize starch or potato starch), the flour and starch together being present preferably in an amount of 50-75%, more preferably 55-70%. The presently claimed process is particularly suitable for making a rehydratable roux or sauce base. Such roux or sauce base can form the thickening system for fond, milk, stock or other aqueous liquid to form e.g. a thickened soup or sauce. When only or mainly flour is used, heat will need to be applied to obtain the thickening. For no-cook roux or quick cook roux the presence of starch (preferably waxy maize starch or potato starch) is preferred next to or instead of flour. Furthermore, depending on the ultimate usage flavourings, colourings, herbs, spices and others may be present.

The size-reducing step in the above process is preferably such that a particulate or granular matter is obtained in which at least 50% by weight of the particles have a size of between 0.1 and 8 mm. Whether such is needed will depend on actual machine arrangement in the factory, but such size reducing is common to the person of average skill in the art.

The invention further relates to a particulate food product having a total moisture level of less than 10% (by weight on the total food product, preferably less than 5%) and comprising 25-60% (by weight based on the total food product) of fat and 40-75% (by weight based on the total food product) of flour and/or starch, wherein 80-100% (preferably 90-100%) of said fat is obtainable by:
- blending a first fraction comprising 80-100% (by weight, preferably 90-100%) fractionated palm oil stearin (POs) with a second fraction comprising 80-100% (by weight, preferably 90-100%) multifractionated palm oil stearin (mfPOs) in a weight ratio of 50-95% first fraction and 50-5% second fraction,
- subjecting said blended fat fractions to an interesterification process.

### Detailed description of the invention

It is preferred that the blend which is subjected to interesterification comprises 80-100% (% by weight, based on the total fat), preferably 90-100%, more preferably 97-100%, of a blend which blend preferably comprises 60-80% of the first fraction and 20-40% of the second fraction.

In the above process and product, the fractionated palm oil stearin is preferably obtained by fractionating palm oil. Such a product is in the fat industry generally described as POs, and can be obtained by physical fractionation of palm oil. Such fractionation is known in the art, as is fractionated palm oil stearin. For example, such can be carried out by heating to e.g. 60°C followed by slow cooling to e.g. 20°C, and filtering out the big crystals.

In the present invention multifractionated palm oil stearin (known in industry as mfPOs) of the second fraction is preferably obtained by fractionating palm oil stearin (i.e. subjecting palm oil stearin which is obtained by fractionation to a further fractionation step). Again, such is known in the fat industry.

In the present invention it is preferred that the first fraction is a palm oil stearin having a slip melting point of 47-55°C (preferably of 51-55°C). It is further preferred that the first fraction is a palm oil stearin having an iodine value of 25-48, preferably 30-40, more preferably 30-36. Such POs can have a N20 of 63-69, a N30 of 43-48, a N40 of approx. 29.

Regarding the second fraction, this is preferably a multifractionated palm oil stearin having an iodine value of 10-20, preferably of 10-16. Such mfPOs can have a N20 of at least 91, a N30 of 94-85, a N40 of 80-75.

It is in the present invention preferred that none of the fat or fractions thereof are hydrogenated. Likewise, it is preferred that the composition of the present invention is free of animal fat.

### Example

An interesterified fat was obtained from the trade which was the result of interesterifying a blend of 75% (wt) of palm oil stearin with a melting point of 52°C (POs52) and 25% (wt) of multifractionated palm oil stearin with an iodine value of 15 (mfPOsIV15).

The resulting fat was made into a dry white roux preparation by the following process:
- heating the fat to about 70-80°C and add to a Stephan cutter
- adding flour such that the amount flour is 55% (weight) and the fat 45% (wt)
- closing the cutter and mixing and heating to about 115-120°C for about 30 minutes
- applying vacuum to the cutter until the moisture content is about 3.5-4% (weight % on total mix)
- bringing back the pressure to atmospheric
- cooling the contents initially in the cutter and further on a cooling belt and holding for 4 minutes in a screw mixer
- breaking down the lumps obtained to granules (in the resulting product at least 50% by weight will have a size of between 0.5 and 8 mm), followed by further cooling by subjecting the granular material to flowing cool air.

The resulting product was a granular material which was substantially free-flowing to enable filling of containers, and had a good, non-waxy mouthfeel when diluted with hot milk under heating to a white sauce.

## Claims

1. Particulate food product having a total moisture level of less than 10%, by weight on the total food product, preferably less than 5%, and comprising 25-60%, by weight based on the total food product, of fat and 40-75%, by weight based on the total food product, of flour and/or starch, wherein 80-100%, preferably 90-100%, of said fat is obtainable by;
• blending a first fraction comprising 80-100%, by weight, preferably 90-100%, fractionated palm oil stearin (POs) with a second fraction comprising 80-100% by weight, preferably 90-100%, multifractionated palm oil stearin (mfPOs) In a weight ratio of 50-95% first fraction and 50-5% second fraction,
• subjecting said blended fat fractions to an interesterification process.

2. Food product according to claim 1, wherein the fractionated palm oil stearin is obtainable by fractionating palm oil,

3. Food product according to claim 1-2, wherein the multifractionated palm oil stearin is obtainable by fractionating palm oil stearin.

4. Food product according to claim 1-3, wherein the first fraction is a palm oil stearin having a slip melting point of 47-55°C, preferably of 51-55°C.

5. Food product according to claim 1-4, wherein the first fraction is a palm oil stearin having an iodine value of 25-48, preferably 30-40, more preferably 30-36.

6. Food product according to claim 1-5, wherein the second fraction is a multifractionated palm oil stearin having an iodine value of 10-20, preferably of 10-15.

7. Food product according to claim 1-6, wherein the product comprises 25-50%, weight % on total product, of fat, more preferably 30-45%.

8. Food product according to claim 1-7, wherein the product comprises 10-65%, weight % an total product, flour and/or 0-65% starch, the flour and starch together being present preferably in an amount of 50-75%, more preferably 55-70%.

9. Food product according to claim 1-8, wherein the food product is a rehydratable roux.

10. Process for manufacturing a particulate food product having a total moisture level of less than 10%, by weight on the total food product, preferably less than 5%, and comprising 25-60%, by weight based on the total food product, of fat and 40-75%, by weight based on the total food product, of flour and/or starch, wherein 80-100% (preferably 90-100%) of said fat is obtainable by:
• blending a first fraction comprising 80-100%, by weight, preferably 90-100%, fractionated palm oil stearin (POs) with a second fraction comprising 80-100%, by weight, preferably 90-100%, multifractionated palm oil stearin (mfPOs) in a weight ratio of 50-95% first fraction and 50-5% second fraction,
• subjecting said blended fat fractions to an interesterification process,
• mixing the so-obtained fat with the flour and/or starch, and subjecting said mixture to a temperature of at least 80°C, preferably at least 100°C, more preferably at least 110°C,
• reducing the moisture content to below 10% by weight, preferably below 5% by weight, based on total composition,
• cooling to room temperature of the mixture so obtained,
• optionally reducing the size of the so-obtained mixture.

11. Process according to claim 10, wherein the fractionated palm oil stearin is obtained by fractionating palm oil.

12. Process according to claim 10-11, wherein the multifractionated palm oil stearin is obtained by fractionating palm oil stearin.

13. Process product according to claim 10-12, wherein the first fraction is a palm oil stearin having a slip melting point of 47-55°C, preferably of 51-55°C.

14. Process according to claim 10-13, wherein the first fraction is a palm oil stearin having an iodine value of 25-48, preferably 30-40, more preferably 30-36.

15. Process according to claim 10-14, wherein the second fraction is a multifractionated palm oil stearin having an iodine value of 10-20, preferably of 10-15.

16. Process according to claim 10-15, wherein the fat or its fractions are not hydrogenated.

17. Process according to claim 10-16, wherein the product comprises 25-50%, weight % on total product, of fat, more preferably 30-45%.

18. Food product according to claim 10-17, wherein the product comprises 10-65%, weight
% on total product, flour and/or 0-66% starch, the flour and starch together being present preferably in an amount of 50-75%, more preferable 55-70%.

19. Process according to claim 10-18, wherein the food product is a rehydratable roux.

## Patentansprüche

1. Teilchenförmiges Nahrungsmittelprodukt, das eine gesamte Feuchtigkeitsmenge von weniger als 10 %, vorzugsweise weniger als 5 % aufweist, und zwar auf das Gewicht des gesamten Nahrungsmittelproduktes bezogen, und das 25 bis 60 % Fett, und zwar auf das Gewicht des gesamten Nahrungsmittelproduktes bezogen, und 40 bis 75 % Mehl und/oder Stärke, und zwar auf das Gewicht des gesamten Nahrungsmittelproduktes bezogen, aufweist, wobei 80 bis 100 %, vorzugsweise 90 bis 100 % des Fettes wie folgt erhalten werden können:
• Mischen einer ersten Fraktion, die 80 bis 100, vorzugsweise 90 bis 100 Gew.-% fraktioniertes Stearin von Palmöl (PO) aufweist, mit einer zweiten Fraktion, die 80 bis 100, vorzugsweise 90 bis 100 Gew.-% mehrfach fraktioniertes Stearin von Palmöl (mfPO) aufweist, in einem Gewichtsverhältnis von 50 bis 95 % erste Fraktion und 50 bis 5 % zweite Fraktion,
• Unterziehen dieser gemischten Fettfraktionen einem Umesterungsverfahren.

2. Nahrungsmittelprodukt nach Anspruch 1,
wobei das fraktionierte Stearin von Palmöl durch Fraktionieren von Palmöl erhalten werden kann.

3. Nahrungsmittelprodukt nach Anspruch 1 und 2,
wobei das mehrfach fraktionierte Stearin von Palmöl durch Fraktionieren von Stearin von Palmöl erhalten werden kann.

4. Nahrungsmittelprodukt nach den Ansprüchen 1 bis 3,
wobei die erste Fraktion Stearin von Palmöl mit einem Fließschmelzpunkt von 47 bis 55 °C, vorzugsweise von 51 bis 55 °C ist.

5. Nahrungsmittelprodukt nach den Ansprüchen 1 bis 4,
wobei die erste Fraktion Stearin von Palmöl mit einer Iodzahl von 25 bis 48, vorzugsweise von 30 bis 40, stärker bevorzugt von 30 bis 36 ist.

6. Nahrungsmittelprodukt nach den Ansprüchen 1 bis 5,
wobei die zweite Fraktion ein mehrfach fraktioniertes Stearin von Palmöl mit einer Iodzahl von 10 bis 20, vorzugsweise von 10 bis 15 ist.

7. Nahrungsmittelprodukt nach den Ansprüchen 1 bis 6,
wobei das Produkt 25 bis 50, stärker bevorzugt 30 bis 45 Gew.-% Fett aufweist, und zwar auf das gesamte Produkt bezogen.

8. Nahrungsmittelprodukt nach den Ansprüchen 1 bis 7,
wobei das Produkt 10 bis 65 Gew.-% Mehl, und zwar auf das gesamte Produkt bezogen, und/oder 0 bis 65 % Stärke aufweist, wobei das Mehl und die Stärke zusammen vorzugsweise in einer Menge von 50 bis 75 %, stärker bevorzugt von 55 bis 70 % vorliegen.

9. Nahrungsmittelprodukt nach den Ansprüchen 1 bis 8,
wobei das Nahrungsmittelprodukt eine rehydratisierbare Mehlschwitze ist.

10. Verfahren zum Herstellen eines teilchenförmigen Nahrungsmittelproduktes, das eine gesamte Feuchtigkeitsmenge von weniger als 10 %, vorzugsweise weniger als 5 % aufweist, und zwar auf das Gewicht des gesamten Nahrungsmittelproduktes bezogen, und das 25 bis 60 % Fett, und zwar auf das Gewicht des gesamten Nahrungsmittelproduktes bezogen, und 40 bis 75 % Mehl und/oder Stärke, und zwar auf das Gewicht des gesamten Nahrungsmittelproduktes bezogen, aufweist, wobei 80 bis 100 % (vorzugsweise 90 bis 100 %) des Fettes wie folgt erhalten werden können:
• Mischen einer ersten Fraktion, die 80 bis 100, vorzugsweise 90 bis 100 Gew.-% fraktioniertes Stearin von Palmöl (PO) aufweist, mit einer zweiten Fraktion, die 80 bis 100, vorzugsweise 90 bis 100 Gew.-% mehrfach fraktioniertes Stearin von Palmöl (mfPO) aufweist, in einem Gewichtsverhältnis von 50 bis 95 % erste Fraktion und 50 bis 5 % zweite Fraktion,
• Unterziehen dieser gemischten Fettfraktionen einem Umesterungsverfahren,
• Mischen des so erhaltenen Fetts mit dem Mehl und/oder der Stärke und Unterziehen dieses Gemischs einer Temperatur von mindestens 80 °C,
vorzugsweise mindestens 100 °C, stärker bevorzugt mindestens 110 °C,
• Verringern des Feuchtigkeitsgehalts auf weniger als 10 Gew.-%, vorzugsweise weniger als 5 Gew.-%, und zwar auf die gesamte Zusammensetzung bezogen,
• Abkühlen des so erhaltenen Gemischs auf Raumtemperatur,
• gegebenenfalls Verringern der Größe des so erhaltenen Gemischs.

11. Verfahren nach Anspruch 10,
wobei das fraktionierte Stearin von Palmöl durch Fraktionieren von Palmöl erhalten werden kann.

12. Verfahren nach den Ansprüchen 10 bis 11,
wobei das mehrfach fraktionierte Stearin von Palmöl durch Fraktionieren von Stearin von Palmöl erhalten werden kann.

13. Verfahren nach den Ansprüchen 10 bis 12,
wobei die erste Fraktion Stearin von Palmöl mit einem Fließschmelzpunkt von 47 bis 55 °C, vorzugsweise von 51 bis 55 °C ist.

14. Verfahren nach den Ansprüchen 10 bis 13,
wobei die erste Fraktion Stearin von Palmöl mit einer Iodzahl von 25 bis 48, vorzugsweise von 30 bis 40, stärker bevorzugt von 30 bis 36 ist.

15. Verfahren nach den Ansprüchen 10 bis 14,
wobei die zweite Fraktion ein mehrfach fraktioniertes Stearin von Palmöl mit einer Iodzahl von 10 bis 20, vorzugsweise von 10 bis 15 ist.

16. Verfahren nach den Ansprüchen 10 bis 15,
wobei das Fett oder dessen Fraktionen nicht gehärtet sind.

17. Verfahren nach den Ansprüchen 10 bis 16,
wobei das Produkt 25 bis 50, stärker bevorzugt 30 bis 45 Gew.-% Fett aufweist, und zwar auf das gesamte Produkt bezogen.

18. Nahrungsmittelprodukt nach den Ansprüchen 10 bis 17,
wobei das Produkt 10 bis 65 Gew.-% Mehl, und zwar auf das gesamte Produkt bezogen, und/oder 0 bis 65 % Stärke aufweist, wobei das Mehl und die Stärke zusammen vorzugsweise in einer Menge von 50 bis 75 %, stärker bevorzugt von 55 bis 70 % vorliegen.

19. Verfahren nach den Ansprüchen 1 bis 18,
wobei das Nahrungsmittelprodukt eine rehydratisierbare Mehlschwitze ist.

## Revendications

1. Produit alimentaire particulaire ayant une teneur totale en humidité de moins de 10 %, en poids par rapport au produit alimentaire total, de préférence de moins de 5 %, et comprenant de 25 à 60 %, en poids par rapport au produit alimentaire total, de graisse et de 40 à 75 %, en poids par rapport au produit alimentaire total, de farine et/ou d'amidon, dans lequel de 80 à 100 %, de préférence de 90 à 100 %, de ladite graisse peuvent être obtenus en :
• mélangeant une première fraction comprenant de 80 à 100 %, en poids, de préférence de 90 à 100 %, de stéarine d'huile de palme fractionnée (POs) avec une deuxième fraction comprenant de 80 à 100 %, en poids, de préférence de 90 à 100 %, de stéarine d'huile de palme multifractionnée (mfPOs) dans un rapport pondéral de 50 à 95 % de la première fraction et de 50 à 5 % de la deuxième fraction,
• soumettant lesdites fractions grasses mélangées à un procédé d'interestérification.

2. Produit alimentaire selon la revendication 1, dans lequel la stéarine d'huile de palme fractionnée peut être obtenue en fractionnant de l'huile de palme.

3. Produit alimentaire selon la revendication 1 à 2, dans lequel la stéarine d'huile de palme multifractionnée peut être obtenue en fractionnant de la stéarine d'huile de palme.

4. Produit alimentaire selon la revendication 1 à 3, dans lequel la première fraction est une stéarine d'huile de palme ayant un point d'écoulement de 47 à 55°C, de préférence de 51 à 55°C.

5. Produit alimentaire selon la revendication 1 à 4, dans lequel la première fraction est une stéarine d'huile de palme ayant un indice d'iode de 25 à 48, de préférence de 30 à 40, plus préférablement de 30 à 36.

6. Produit alimentaire selon la revendication 1 à 5, dans lequel la deuxième fraction est une stéarine d'huile de palme multifractionnée ayant un indice d'iode de 10 à 20, de préférence de 10 à 15.

7. Produit alimentaire selon la revendication 1 à 6, dans lequel le produit comprend de 25 à 50 %, % en poids par rapport au produit total, de graisse, plus préférablement de 30 à 45 %.

8. Produit alimentaire selon la revendication 1 à 7, dans lequel le produit comprend de 10 à 65 %, % en poids par rapport au produit total, de farine et/ou de 0 à 65 % d'amidon, la farine et l'amidon étant conjointement présents de préférence en une quantité de 50 à 75 %, plus préférablement de 55 à 70 %.

9. Produit alimentaire selon la revendication 1 à 8, dans lequel le produit alimentaire est un roux réhydratable.

10. Procédé de fabrication d'un produit alimentaire particulaire ayant une teneur totale en humidité inférieure à 10 %, en poids par rapport au produit alimentaire total, de préférence inférieure à 5 %, et comprenant de 25 à 60 %, en poids par rapport au produit alimentaire total, de graisse et de 40 à 75 %, en poids par rapport au produit alimen-taire total, de farine et/ou d'amidon, dans lequel de 80 à 100 % (de préférence de 90 à 100 %) de ladite graisse peuvent être obtenus en :
• mélangeant une première fraction comprenant de 80 à 100 %, en poids, de préférence de 90 à 100 %, de stéarine d'huile de palme fractionnée (POs) avec une deuxième fraction comprenant de 80 à 100 %, en poids, de préférence de 90 à 100 %, de stéarine d'huile de palme multifractionnée (mfPOs) dans un rapport pondéral de 50 à 95 % de la première fraction et de 50 à 5 % de la deuxième fraction,
• soumettant lesdites fractions grasses mélangées à un procédé d'interestérification,
• mélangeant la graisse ainsi obtenue avec la farine et/ou l'amidon, et soumettant ledit mélange à une température d'au moins 80°C, de préférence d'au moins 100°C, plus préférablement d'au moins 110°C,
• réduisant la teneur en humidité à une valeur inférieure à 10 % en poids, de préférence inférieure à 5 % en poids, par rapport à la composition totale,
• refroidissant à la température ambiante le mélange ainsi obtenu,
• réduisant optionnellement la taille du mélange ainsi obtenu.

11. Procédé selon la revendication 10, dans lequel la stéarine d'huile de palme fractionnée est obtenue en fractionnant de l'huile de palme.

12. Procédé selon la revendication 10 à 11, dans lequel la stéarine d'huile de palme multifractionnée est obtenue en fractionnant de la stéarine d'huile de palme.

13. Procédé selon la revendication 10 à 12, dans lequel la première fraction est une stéarine d'huile de palme ayant un point d'écoulement de 47 à 55°C, de préférence de 51 à 55°C.

14. Procédé selon la revendication 10 à 13, dans lequel la première fraction est une stéarine d'huile de palme ayant un indice d'iode de 25 à 48, de préférence de 30 à 40, plus préférablement de 30 à 36.

15. Procédé selon la revendication 10 à 14, dans lequel la deuxième fraction est une stéarine d'huile de palme multifractionnée ayant un indice d'iode de 10 à 20, de préférence de 10 à 15.

16. Procédé selon la revendication 10 à 15, dans lequel la graisse ou ses fractions ne sont pas hydrogénées.

17. Procédé selon la revendication 10 à 16, dans lequel le produit comprend de 25 à 50 %, % en poids par rapport au produit total, de graisse, plus préférablement de 30 à 45 %.

18. Produit alimentaire selon la revendication 10 à 17, dans lequel le produit comprend de 10 à 65 %, % en poids par rapport au produit total, de farine et/ou de 0 à 65 % d'amidon, la farine et l'amidon étant conjointement présents de préférence en une quantité de 50 à 75 %, plus préférablement de 55 à 70 %.

19. Procédé selon la revendication 10 à 18, dans lequel le produit alimentaire est un roux réhydratable.
